# EUROPEAN PATENT SPECIFICATION

(11) **EP 1 967 399 B1**
(45) Date of publication and mention of the grant of the patent: **23.12.2009**
(21) Application number: 08102241.0
(22) Date of filing: 04.03.2008
(51) Int. Cl.: B60H 1/32, F28F 9/04

(54) **A connector device for an AC condenser and a vehicle**
Steckervorrichtung für einen Klimaanlageverdampfer und Fahrzeug
Dispositif de connection pour condensateur de climatisation et véhicule

(30) Priority: 08.03.2007 SE 0700565
(43) Date of publication of application: 10.09.2008
(73) Proprietor: Scania CV AB, 151 87 Södertälje (SE)
(72) Inventor: Ahlgren, Eva, 16735 Bromma (SE); Jahns, Dieter, 15163 Södertälje (SE)

(56) References cited:
- EP-A- 1 158 261
- EP-A- 1 577 627
- GB-A- 1 219 149
- JP-A- 2005 351 611

## Description

### BACKGROUND

### Technical field

The present invention relates to a connector device according to the introductory portion of the attached claim 1.

The invention also relates to a vehicle according to the attached claim 8.

### BACKGROUND ART

In a vehicle, eg a truck, a condenser of the vehicle AC system is normally positioned in the front of the vehicle, behind a vehicle front cover.

For charging and discharging, the condenser is provided with a charge connection and a discharge connection and a connector bloc receiving a charge pipe and a discharge pipe.

A problem is the piping leading to and from the connector bloc. Today these pipes run to and from the connector bloc practically vertically and then further to the vehicle cabin and to the AC system compressor. This may cause wear of the pipes, which are partly of plastic or rubber, against the vehicle, the truck, front panel covering the condenser etc as well as unwanted vibrations, the space available behind the front panel being extremely limited in most trucks.

Further, this normally causes the need of considerable pipe lengths between, inter alia, the connector bloc and the compressor due to the compressor location, this piping consuming space in an unwanted way.

To solve these problems in view of the general lay-out of the condenser/connector bloc/compressor-arrangement it would be desirable to lead the pipe running between the connector bloc and the compressor sideways from the connector bloc and then further backwards in the longitudinal direction of the vehicle to the compressor. This pipe would then have to cross the other pipe to get to the condenser, which is however not possible due to lack of space between the connector bloc, the pipes and the front panel.

JP 2005 351 611 shows an example of a heat exchanger with a connector bloc.

The object of the present invention is to provide a solution to the problems described above and to provide a better total lay-out of the actual AC arrangement.

### SUMMARY OF THE INVENTION

The object of the present invention is obtained by means of a device and a vehicle according to claims 1 and 8, respectively.

Further advantages are obtained by what is specified in the dependent claims.

### BRIEF DESCRIPTION OF THE DRAWING

A better understanding of the invention should be had from the following detailed description read in conjunction with the attached drawings, in which
- Fig. 1 schematically shows in a perspective view an AC condenser arrangement provided with a first embodiment of a connector device according to the present invention,
- Fig. 2 schematically shows a connector device according to fig. 1 in more detail,
- Fig. 3 schematically shows a front view of a connector bloc according to the present invention and
- Fig. 4 schematically shows a view from above in fig. 3 of the connector bloc according to the invention.

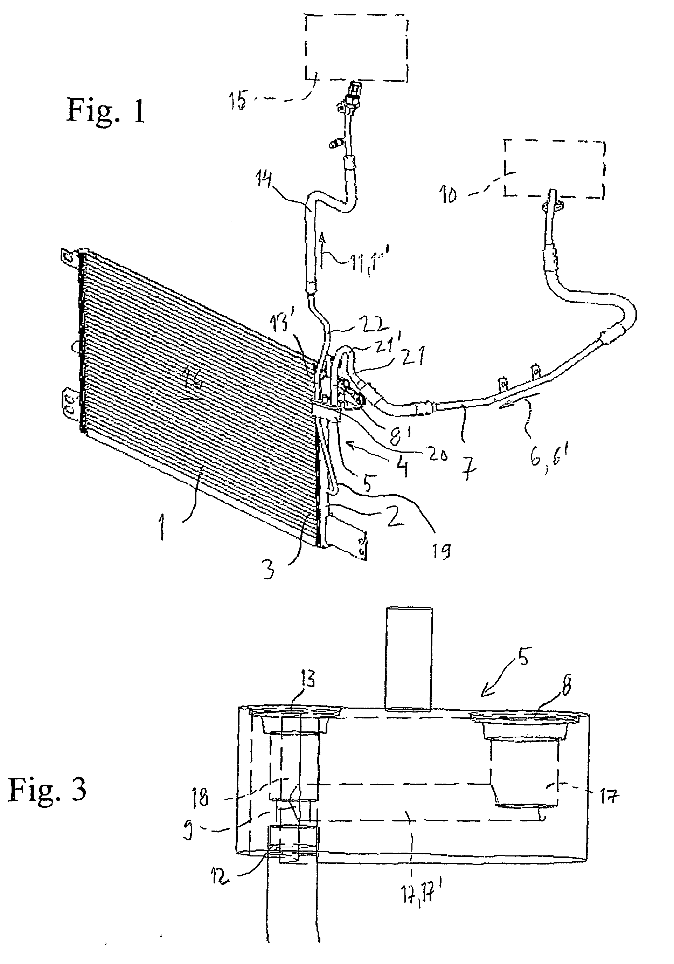

In fig. 1, showing a view over an AC condenser arrangement, 1 designates an AC condenser, preferably having a flat and substantially rectangular configuration and being provided with a connection header 2 at a vertical side 3, a connector device 4 according to the invention being provided with and comprising a connector bloc 5 for transferring a charge gas flow 6 of a charge pipe 7, indicated by an arrow 6', to the condenser via an inlet opening 8 and an outlet opening 9, fig. 3, of the connector bloc. The charge pipe 7 is a part of a piping running from a compressor 10, indicated in fig. 1. The connector bloc is further for transferring a discharge liquid flow 11, indicated by an arrow 11', from the condenser via an inlet opening 12 and an outlet opening 13, fig. 3, of the connector bloc to a discharge pipe 14, the discharge running to the vehicle cabin 15, indicated in fig. 1.

The charge pipe inlet opening 8 and the discharge pipe outlet opening 13 and the respective connecting pipe parts 8', 13', respectively, running thereto are arranged substantially in one plane substantially parallel to the main extension plane 16 of the condenser, the discharge outlet opening 13 being positioned between the charge inlet opening 8 and the condenser header.

According to the invention the connector bloc is arranged so that the charge gas flow 6 crosses the discharge liquid flow 11 in the connector bloc, without, of course, the two flows interfering with each other.

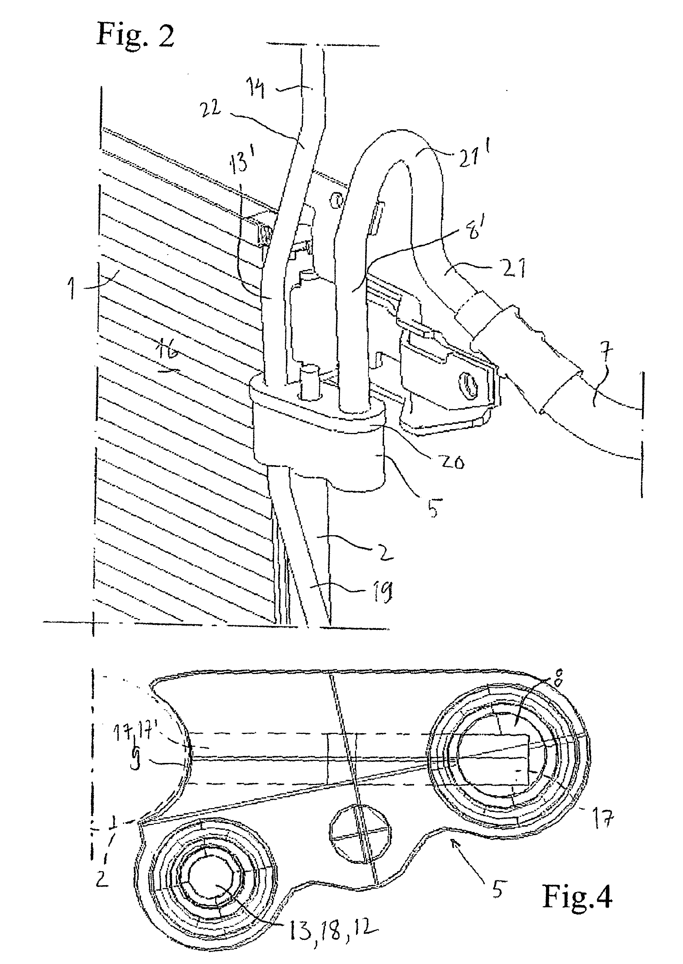

According to preferred embodiments the connector bloc comprises a charge channel 17, fig. 3 and 4, running between the charge inlet opening and the charge outlet opening and a discharge channel 18 running between the discharge inlet opening and the discharge outlet opening, the discharge channel preferably running substantially straight through the connector bloc. Further, at least an outlet portion 17' of the charge channel runs in a direction crossing the discharge channel 18 direction.

Further, according to preferred embodiments the charge inlet opening and the discharge outlet opening are positioned on top of the connector bloc, as can be seen in eg fig. 1.

Preferred is that the connector block is brazed to the condenser header, thereby connecting the charge outlet opening to the header.

Also preferred is that the discharge inlet opening of the connector bloc is connected to the header by means of a connection pipe 19, as can be seen in fig. 1.

20 designates a connection piece preferably provided with and carrying two pre-formed, preferably metallic, connection pipe pieces 21, 22 for connecting the charge gas flow 6 with the charge inlet opening of the connector bloc and the discharge liquid flow 11 with the discharge outlet opening of the connector bloc respectively.

According to preferred embodiments the connection piece 20 is releasably fixed to the connector bloc with one fastening element, preferably a nut or a bolt, not shown.

Preferred is also that the charge connection pipe piece comprises of least one bend 21' to make the pipe make a substantially 90° turn away from the condenser in relation to a pipe part 8' running to the charge inlet of the connector bloc.

The function of the connector device should to a considerable and sufficient extent have been made clear from the description given above.

Thus, in order to meet the demands that the lack of space in the front of the vehicle behind the front cover put on the connection arrangement for the AC condenser, the connection device has according to the invention been designed to extend in a substantially flat configuration substantially parallel to the main extension plane of the condenser, one of the main features being that the charge and discharge pipes do not cross each other but crossing of the charge gas flow and the discharge liquid flow occurs inside the connector bloc, which is provided with two separate channels 17, 18, which crosses each other without interfering with each other in the connector bloc and so that the charge flow is linked from the connector bloc side, turned from the condenser header, to the connector bloc side being turned to the condenser header and thus is directly connectable to the header and preferably to the header upper portion, which is normally the proper input for the charge gas flow into the condenser.

The invention provides a solution to the problems described in the introductory portion of the present application.

According to the normal lay-out of the condenser arrangement it is advantageous to draw the piping from the compressor in the longitudinal direction of the vehicle and then sideways to the connector block to forward the charge gas flow to the condenser. This is made possible by means of the present invention in spite of an extreme lack of space in the front behind the front cover, the lack of space being, inter alia, due to the vehicle motor location, which is not easy to amend but rather impossible under the circumstances.

The specific embodiment shown offers other advantages. Thus, the connection piece solution makes it possible to fasten the connection piece with only one fastening element and to amend the design of the connection pipe pieces using the same connector bloc.

Above, the invention has been described in association with preferred embodiments and examples.

Of course, further embodiments as well as minor amendments and complementary additions may be imagined.

Thus, embodiments may be imagined, in which the charge pipe runs to the side of the connector bloc and hereby to the connector bloc side being turned from the condenser and the header and, thus, runs substantially perpendicular to the header main extension direction. This configuration is adapted to a charge piping running from the compressor in the longitudinal direction of the vehicle and then sideways to the connector bloc.

The invention should not be considered to be limited to the embodiments shown but may be varied within the scope of the appended claims.

## Claims

1. A connector device for an AC condenser comprising a connection header (2) and a connector bloc (5) for transferring a charge gas flow (6) of a charge pipe (7) to the condenser via an inlet opening (8) and an outlet opening (9) of the connector bloc (5) and for transferring a discharge liquid flow (11) from the condenser via an inlet opening (12) and an outlet opening (13) to a discharge pipe (14), the charge inlet opening (8) and the discharge outlet opening (13) and the respective connecting pipe parts running thereto being arranged substantially in one plane substantially parallel to the main extension plane of the condenser, the discharge outlet opening (13) being positioned between the charge inlet opening (8) and the condenser header (2), whereby the connector bloc (5) is arranged so that the charge gas flow (6) crosses the discharge liquid flow (11) in the connector bloc, **characterized in that** the connector bloc comprises a charge channel (17) running between the charge inlet opening (8) and the charge outlet opening (9) and a discharge channel running between the discharge inlet opening (12) and the discharge outlet opening (13), the discharge channel (18) running substantially straight through the connector bloc, at least an outlet portion (17') of the charge channel running in a direction crossing the discharge channel direction.

2. A device according to claim 1, wherein the charge inlet opening (8) and the discharge outlet opening (13) are positioned on top of the connector bloc.

3. A device according to any one of the foregoing claims, wherein the connector bloc is brazed to the header (2) thereby connecting the charge outlet opening to the header.

4. A device according to any one of the foregoing claims, wherein the discharge inlet opening (12) of the connector bloc is connected to the header by means of a connection pipe (19).

5. A device according to any one of the foregoing claims, wherein a connection piece is provided carrying two pre-formed, preferably metallic, connection pipe pieces (21, 22) for connecting the charge gas flow with the charge inlet opening of the connector bloc and the discharge liquid flow (11) with the discharge outlet opening of the connector bloc, respectively.

6. A device according to claim 5, wherein the connection piece is releaseably fixed to the connector bloc with one fastening element, preferably a nut or a bolt.

7. A device according to claim 5, wherein the charge connection pipe piece comprises at least one bend (21') to make the pipe make a substantially 90° turn away from the condenser in relation to a pipe part (18') running to the charge inlet opening of the connector bloc.

8. A vehicle, preferably a truck, **characterized in that** it comprises a connector device according to anyone of claims 1-8.

## Patentansprüche

1. Anschlussvorrichtung für einen AC Kühler umfassend einen Anschlusskopf (2) und einen Anschlussblock (5) zum Übertragen eines Füll-Gasstroms (6) eines Füllrohrs (7) zu dem Kühler durch eine Eintrittsöffnung (8) und eine Austrittsöffnung (9) des Anschlussblocks (5), und zum Übertragen eines Abführ-Flüssigkeitsstroms (11) von dem Kühler zu einem Abführrohr (14) durch eine Eintrittsöffnung (12) und eine Austrittsöffnung (13), wobei die Füll-Eintrittsöffnung (8) und die Abführ-Austrittsöffnung (13) und die entsprechenden, zu diesen verlaufenden Verbindungsrohrteile im Wesentlichen in einer Ebene angeordnet sind, die im Wesentlichen parallel zu der Haupterstreckungsebene des Kühlers verläuft, wobei die Abführ-Austrittsöffnung (13) zwischen der Füll-Eintrittsöffnung (8) und dem Kühlerkopf (2) positioniert ist, wodurch der Anschlussblock (5) so angeordnet ist, dass der Füll-Gasstrom (6) den Abführ-Flüssigkeitsstrom (11) in dem Anschlussblock kreuzt,
**dadurch gekennzeichnet, dass** der Anschlussblock einen Füllkanal (17), der zwischen der Füll-Eintrittsöffnung (8) und der Füll-Austrittsöffnung (9) verläuft, und einen Abführkanal umfasst, der zwischen der Abführ-Eintrittsöffnung (12) und der Abführ-Austrittsöffnung (13) verläuft, wobei der Abführkanal (18) im Wesentlichen geradlinig durch den Anschlussblock verläuft, wobei zumindest ein Austrittsabschnitt (17') des Füllkanals in eine Richtung verläuft, die die Abführkanal-Richtung kreuzt.

2. Vorrichtung nach Anspruch 1,
wobei die Füll-Eintrittsöffnung (8) und die Abführ-Austrittsöffnung (13) oben auf dem Anschlussblock positioniert sind.

3. Vorrichtung nach einem der vorangehenden Ansprüche,
wobei der Anschlussblock an den Kopf (2) gelötet ist, um dadurch die Füll-Austrittsöffnung mit dem Kopf zu verbinden.

4. Vorrichtung nach einem der vorangehenden Ansprüche,
wobei die Abführ-Eintrittsöffnung (12) des Anschlussblocks mit dem Kopf mittels eines Anschlussrohrs (19) verbunden ist.

5. Vorrichtung nach einem der vorangehenden Ansprüche,
wobei ein Anschlussstück vorgesehen ist, das zwei vorgeformte, vorzugsweise metallische, Anschlussrohrstücke (21, 22) trägt, um den Füll-Gasstrom mit der Füll-Eintrittsöffnung des Anschlussblocks und entsprechend den Abführ-Flüssigkeitsstrom (11) mit der Abführ-Austrittsöffnung des Anschlussblocks zu verbinden.

6. Vorrichtung nach Anspruch 5,
wobei das Anschlussstück an dem Anschlussblock lösbar mit einem Befestigungselement, vorzugsweise einer Mutter oder einem Bolzen, angebracht ist.

7. Vorrichtung nach Anspruch 5,
wobei das Füll-Anschlussrohrstück zumindest eine Krümmung (21') aufweist, um dem Rohr eine im Wesentlichen 90° Wendung weg von dem Kühler in Bezug auf ein Rohrteil (8') zu verleiten, das zu der Füll-Eintrittsöffnung des Anschlussblocks verläuft.

8. Fahrzeug, vorzugsweise ein Lastkraftwagen,
**dadurch gekennzeichnet, dass** das Fahrzeug eine Anschlussvorrichtung nach einem der Ansprüche 1 bis 7 aufweist.

## Revendications

1. Dispositif de connexion destiné à un condenseur d'air conditionné comprenant une embase de connexion (2) et un bloc de connecteur (5) pour transférer un flux gazeux d'alimentation (6) d'une conduite d'alimentation (7) au condenseur via une ouverture d'alimentation (8) et une ouverture d'évacuation (9) du bloc de connecteur (5) et pour transférer un flux liquide d'évacuation (11) du condenseur via une ouverture d'alimentation (12) et une ouverture d'évacuation (13) vers une conduite d'évacuation (14), l'ouverture d'alimentation (8) et l'ouverture d'évacuation (13) ainsi que les parties de conduites de connexion respectives y conduisant étant agencées sensiblement dans un plan sensiblement parallèle au plan d'extension principal du condenseur, l'ouverture d'évacuation (13) étant placée entre l'ouverture d'alimentation (8) et l'embase de condenseur (2), moyennant quoi le bloc de connecteur (5) est agencé de manière à ce que le flux gazeux d'alimentation (6) traverse le flux liquide d'évacuation (11) dans le bloc de connecteur,
**caractérisé en ce que** le bloc de connecteur comprend un canal d'alimentation (17) disposé entre l'ouverture d'alimentation (8) et l'ouverture d'évacuation (9) et un canal d'évacuation disposé entre l'ouverture d'alimentation (12) et l'ouverture d'évacuation (13), le canal d'évacuation (18) étant disposé sensiblement en ligne droite à travers le bloc de connecteur, au moins une partie d'évacuation (17') du canal d'évacuation étant disposée dans une direction traversant la direction du canal d'évacuation.

2. Dispositif selon la revendication 1, dans lequel l'ouverture d'alimentation (8) et l'ouverture d'évacuation (13) sont placées sur le bloc de connecteur.

3. Dispositif selon l'une quelconque des revendications précédentes dans lequel le bloc de connecteur est soudé à l'embase (2), raccordant ainsi l'ouverture d'évacuation à l'embase.

4. Dispositif selon l'une quelconque des revendications précédentes, dans lequel l'ouverture d'alimentation (12) du bloc de connecteur est raccordée à l'embase à l'aide d'une conduite de raccordement (19).

5. Dispositif selon l'une quelconque des revendications précédentes, dans lequel une pièce de raccordement est prévue, portant deux morceaux de conduites de raccordement (21, 22) préformées, de préférence métalliques, pour raccorder, respectivement, le flux gazeux d'alimentation à l'ouverture d'alimentation du bloc de connecteur et le flux liquide d'évacuation (11) à l'ouverture d'évacuation du bloc de connecteur.

6. Dispositif selon la revendication 5, dans lequel la pièce de raccordement est fixée de manière libérable au bloc de connecteur à l'aide d'un élément de fixation, de préférence un écrou ou un boulon.

7. Dispositif selon la revendication 5, dans lequel le morceau de conduite de raccordement d'alimentation présente au moins un coude (21') afin que la conduite se détourne sensiblement à 90 ° du condenseur au niveau d'une partie de conduite (18') menant à l'ouverture d'alimentation du bloc de connecteur.

8. Véhicule, de préférence un camion, **caractérisé en ce qu'**il comprend un dispositif de connexion selon l'une quelconque des revendications 1 à 8.
